# EUROPÄISCHE PATENTSCHRIFT

(11) **EP 3 808 529 B1**
(45) Veröffentlichungstag und Bekanntmachung des Hinweises auf die Patenterteilung: **08.05.2024**
(21) Anmeldenummer: 20197958.0
(22) Anmeldetag: 24.09.2020
(51) Int. Cl.: B29C 45/16, B29C 45/37, B29C 45/44, F16F 1/371, B29C 45/14, B29C 45/36, B29K 21/00, B29K 105/00, B29L 31/00, B61F 5/10, B61F 5/30, B29C 45/40, B29C 33/56

(54) **VERFAHREN ZUR HERSTELLUNG EINES BESCHICHTETEN AUFLAGERELEMENTS AUS ELASTOMERMATERIAL**
METHOD OF MAKING A COATED SUPPORT ELEMENT MADE OF ELASTOMERIC MATERIAL
PROCÉDÉ DE FABRICATION D'UN ÉLÉMENT D'APPUI REVÊTU D'ÉLASTOMÈRE

(30) Priorität: 17.10.2019 DE 102019215979
(43) Veröffentlichungstag der Anmeldung: 21.04.2021
(73) Patentinhaber: ContiTech Deutschland GmbH, 30175 Hannover (DE)
(72) Erfinder: Kranz, Harald, 30419 Hannover (DE)
(74) Vertreter: Continental Corporation

(56) Entgegenhaltungen:
- EP-A1- 2 196 492
- WO-A1-98/46930
- FR-A- 1 123 873
- JP-A- S60 116 419
- JP-A- 2005 007 608
- JP-A- 2007 112 318
- JP-A- 2012 086 762
- US-A1- 2017 267 260

## Beschreibung

Die vorliegende Erfindung betrifft ein Verfahren zur Herstellung eines mit einer Beschichtung beschichteten Auflagerelements aus Elastomermaterial, insbesondere für Fahrzeuge, vorzugsweise für Schienenfahrzeuge. Das Auflagerelement kann insbesondere ein Federelement sein und die Beschichtung des Auflagerelements kann insbesondere eine Brandschutzbeschichtung sein. Ein weiterer Aspekt der Erfindung betrifft ein solches Auflagerelement aus Elastomermaterial.

Die JP 2005 007608 A offenbart die Herstellung von Gummilagern für Vorderstabilisatoren durch Zweikomponenten-Spritzgießen von vulkanisierbaren Elastomeren, wobei zunächst die äußere Schicht und nach dem Ziehen eines Werkzeugkerns der innere Teil des Lagers gespritzt wird. Die JP 2007 112318 A offenbart die äußere mit einer Befestigungsschelle in Kontakt tretende Oberfläche von Gummilagern mit Riefen zu versehen. Die WO 98/46930 A1 offenbart zweischichtige und durch Umspritzen hergestellte Auflager in Form von Federelementen für Schienenfahrzeuge.

Um die Brandschutzeigenschaften von Schienenfahrzeugen zu erhöhen, sollen dort eingesetzte Elastomerfedern mit einer Brandschutzbeschichtung versehen werden, welche vorgegebene Brandschutznormen erfüllt. Die Herstellung der Beschichtung und das Aufbringen dieser auf den eigentlichen Federkörper sind jedoch aus mehreren Gründen schwierig. Insbesondere ist es schwierig, die unterschiedlichen Gummimischungen von Federkörper und Beschichtung zu verbinden und definierte Schichtdicken zu gewährleisten, um auf diese Weise einen reproduzierbaren Fertigungsprozess zu erhalten. Daher ist die Aufgabe der vorliegenden Erfindung, ein Verfahren bereitzustellen, das die oben genannten Schwierigkeiten überwindet.

Diese Aufgabe wird durch ein Verfahren zur Herstellung eines beschichteten Auflagerelements aus Elastomermaterial gemäß dem Anspruch 1 gelöst. Vorteilhafte Ausführungsformen sind in den abhängigen Ansprüchen definiert.

Das Verfahren umfasst insbesondere die folgenden Schritte:
Zunächst wird eine Einspritzpressvorrichtung mit mehreren relativ zueinander beweglichen Formteilen bereitgestellt. In einer geschlossenen Stellung der Formteile umschließen diese gemeinsam einen Hohlraum. Der Hohlraum entspricht vorzugsweise der Form des herzustellenden Auflagerelements. Die Formteile weisen dabei eine zum Hohlraum weisende innere Oberfläche auf, welche mit einer Oberflächenstruktur versehen ist, d.h. eine vergrößerte Oberfläche mit Vertiefungen und/oder Ausbuchtungen aufweist.

In den Hohlraum wird nun ein Formkern eingelegt. Der Formkern entspricht vorzugsweise der Form des herzustellenden Auflagerelements abzüglich einer Beschichtung. Dabei bleibt zwischen den Formteilen und dem Formkern ein Spalt, welcher vorzugsweise der Form der Beschichtung des herzustellenden Auflagerelements entspricht.

Anschließend wird eine erste Mischung, insbesondere eine Elastomermischung, in den Spalt eingefügt. Dabei wird die erste Mischung vorzugsweise durch Schließen der Formteile plastifiziert und füllt den Spalt aus, vorzugsweise vollständig aus. Auf diese Weise bildet die erste Mischung eine Hülle, welche die Form der Beschichtung hat. Dabei füllt die erste Mischung auch die Oberflächenstruktur aus, vorzugsweise vollständig aus, so dass die Kontaktfläche vergrößert und damit die Adhäsion zwischen der inneren Oberfläche der Formteile und der Hülle erhöht wird.

Nachfolgend wird die Hülle anvulkanisiert. Das bedeutet, der Vulkanisationsprozess wird begonnen aber noch nicht abgeschlossen, so dass zumindest die Oberfläche der Hülle gehärtet ist. Auf diese Weise kann die Hülle leichter von dem Formkern und den Formteilen gelöst werden.

Dann wird der Formkern aus der Hülle entfernt. Das Entfernen des Formkerns kann auch dadurch erleichtert werden, dass der Formkern als Zerfallskern ausgebildet ist, der in kleine Teile zerlegt werden kann, die leichter entfernt werden können. Durch die Oberflächenstruktur und die hierdurch erhöhte Adhäsion zwischen der inneren Oberfläche der Formteile und der Hülle, wird die Hülle formstabil an der inneren Oberfläche der Formteile gehalten, nachdem der Formkern entfernt wurde.

Danach wird, vorzugsweise unter Druck in geschlossener Stellung der Formteile, eine zweite Mischung, insbesondere eine Elastomermischung verschieden von der ersten Mischung, in den Hohlraum eingespritzt. Das Einspritzen erfolgt vorzugsweise durch eine oder mehrere Öffnungen in den Formteilen. Dabei wird die zweite Mischung vorzugsweise plastifiziert und bildet einen Auflagerkörper, der an der Innenseite der Hülle anliegt. Vorzugsweise nimmt dieser Auflagerkörper den durch Entfernen des Formkerns freigewordenen Teil des Hohlraums vollständig aus. Alternativ kann der Auflagerkörper jedoch auch teilweise oder vollständig hohl ausgebildet sein.

Der Auflagerkörper kann neben der zweiten Mischung auch noch weitere Komponenten, wie beispielsweise Metallteile, enthalten oder mit diesen verbunden sein. So können Metallplatten, die beispielsweise als Lasteinleitungselemente dienen, an der Oberseite und/oder an der Unterseite des Auflagerkörpers vorgesehen sein, die mit der zweiten Mischung bzw. dem Elastomermaterial des Auflagerkörpers verbunden, beispielsweise verklebt, sind bzw. werden. Solche Metallplatten können vor und/oder nach dem Einspritzen der zweiten Mischung in den Hohlraum eingebracht werden, welcher die Form der Metallplatten berücksichtigt. Die Beschichtung wird dabei vorzugsweise nur an denjenigen Oberflächen des Auflagerkörpers aufgebracht, die nicht von Metallplatten bedeckt sind.

Alternativ oder zusätzlich zu den Metallplatten kann der Auflagerkörper mit verstärkenden Metallblättern durchzogen sein. Solche Metallblätter können vor dem Einspritzen der zweiten Mischung in dem Hohlraum vorgesehen werden, so dass die zweite Mischung um diese herumgespritzt wird. Auf diese Weise kann ein Auflagerkörper aus einem Elastomer-Metall-Verbundmaterial gebildet werden.

Schließlich wird der Auflagerkörper zusammen mit der Hülle in dem Hohlraum ausvulkanisiert, d.h. zu Ende vulkanisiert. Dabei werden der Auflagerkörper und die Hülle miteinander verbunden, so dass die Hülle die Beschichtung des Auflagerkörpers bildet. Anschließend wird das fertiggestellte beschichtete Auflagerelement, d.h. der mit der Beschichtung versehene Auflagerkörper, aus dem Hohlraum entnommen.

Auf diese Weise kann ein beschichtetes Auflagerelement hoher Qualität in einem effizienten und gut reproduzierbaren Fertigungsprozess hergestellt werden.

In einer bevorzugten Ausführungsform ist die Oberflächenstruktur vorzugsweise gleichmäßig über die innere Oberfläche, vorzugsweise über die gesamte innere Oberfläche der Formteile verteilt. Auf diese Weise wird die Hülle gleichmäßig formstabil an der inneren Oberfläche der Formteile gehalten.

In einer weiteren bevorzugten Ausführungsform weist der Formkern an seiner Oberfläche eine haftungsarme Beschichtung auf, beispielsweise aus Polytetrafluorethylen (PTFE). Hierdurch kann der Formkern leichter von der Hülle gelöst und entfernt werden.

Die Oberflächenstruktur weist mehrere Aussparungen auf, welche beim Einfügen der ersten Mischung oder beim Schließen der Formteile von der ersten Mischung ausgefüllt werden, vorzugsweise vollständig ausgefüllt werden, so dass die Hülle mehrere in die Aussparungen ragende bzw. mit den Aussparungen eingreifende Vorsprünge aufweist. Auf diese Weise wird eine besonders große Kontaktfläche und somit auch Reibung zwischen der Hülle und den Formteilen erreicht.

Dabei ist es besonders bevorzugt, wenn die Aussparungen als Bohrungen quer oder vorzugsweise senkrecht zur inneren Oberfläche der Formteile und die Vorsprünge als mit den Bohrungen reibschlüssig eingreifende Stifte gebildet sind. Hierdurch wird eine reibschlüssige Verankerung der Vorsprünge in den Aussparungen gebildet.

Die Aussparungen und Vorsprünge sind mit Hinterschneidungen versehen, die formschlüssig miteinander eingreifen. Das heißt, die Aussparungen und Vorsprünge haben einen vergrößerten oder gebogenen Kopf im Vergleich zu dem Hals, der an der inneren Oberfläche der Formteile bzw. an der äußeren Oberfläche der Hülle mündet, so dass der Kopf eine Bewegung der Vorsprünge außer Eingriff mit den Aussparungen sperrt. Auf diese Weise wird eine besonders feste formschlüssige Verankerung der Vorsprünge in den Aussparungen gebildet.

In einer bevorzugten Ausführungsform wird nach dem Ausvulkanisieren das mit der Beschichtung beschichtete Auflagerelement mitsamt den Vorsprüngen aus dem Hohlraum der Formteile entnommen, wobei die Vorsprünge gegebenenfalls elastisch verformt werden, um aus den Aussparungen entfernt zu werden. Auf diese Weise verbleiben die Vorsprünge also zunächst an dem Auflagerelement, was ein besonders einfaches Vorgehen bedeutet. Dabei muss die Form und Festigkeit der Vorsprünge jedoch ausreichend sein, sodass diese bei der Entnahme des Auflagerelements nicht abreißen.

Dabei ist es besonders bevorzugt, wenn nach dem Entnehmen des Auflagerelements aus dem Hohlraum die Vorsprünge entfernt werden. Beispielsweise können die Vorsprünge abgeschnitten werden oder sie können gefroren und abgeschlagen werden. Auf diese Weise kann ein Auflagerelement mit einer glatten Oberfläche der Beschichtung, d.h. ohne Vorsprünge hergestellt werden, falls dies bevorzugt ist. Alternativ können die Vorsprünge jedoch auch dauerhaft an der Beschichtung des Auflagerelements verbleiben, da die mechanischen Eigenschaften und Brandschutzeigenschaften hierdurch nicht nennenswert beeinträchtigt werden.

In einer alternativen Ausführungsform wird nach dem Ausvulkanisieren das mit der Beschichtung beschichtete Auflagerelement aus dem Hohlraum der Formteile entnommen, wobei die Vorsprünge abgerissen werden und in den Aussparungen verbleiben. Von dort können Sie beispielsweise in einem späteren Schritt entfernt werden. Auf diese Weise werden die Vorsprünge bereits bei dem Entnehmen des Auflagerelements entfernt, so dass ein späteres Entfernen nicht mehr notwendig ist. Hierfür ist es erforderlich, dass die Form und Festigkeit der Vorsprünge so angepasst ist, dass die Vorsprünge beim Entfernen des Auflagerelements auch tatsächlich abreißen und nicht aus den Aussparungen herausrutschen. Außerdem ist eine erhöhte Kraft zum Lösen des Auflagerelements von den Formteilen erforderlich.

In einer bevorzugten Ausführungsform ist die Beschichtung eine Brandschutzbeschichtung, vorzugsweise aus einem Brandschutzelastomermaterial, das von Feuer oder sehr hohen Temperaturen nicht bzw. nur sehr langsam zerstört wird. Insbesondere ist die erste Mischung eine Brandschutzkautschukmischung. Auf diese Weise kann das Elastomermaterial des Auflagerkörpers geschützt werden, um seine Funktion beizubehalten.

In einer weiteren bevorzugten Ausführungsform ist das Auflagerelement als Notfederelement für Luftfedern von Schienenfahrzeugen oder als Primärfederelement (innerhalb des Drehgestells zwischen Radsatz und Drehgestellrahmen) für Schienenfahrzeuge gebildet. Die Luftfedern sind dabei insbesondere die Sekundärfedern, die zwischen Wagenkasten und Drehgestell vorgesehen sind, während die Primärfederelemente insbesondere innerhalb des Drehgestells zwischen Radsatz und Drehgestellrahmen vorgesehen sind. Alternativ kann das Auflagerelement auch für andere Fahrzeuge, wie Kraftfahrzeuge vorgesehen sein.

Ein weiterer Aspekt der vorliegenden Erfindung betrifft ein Auflagerelement aus Elastomermaterial für Fahrzeuge, insbesondere Schienenfahrzeuge, beschichtet mit einer Brandschutzbeschichtung, insbesondere aus einem von dem Auflagerkörper verschiedenen, brandgeschützten Elastomermaterial, und erhältlich, insbesondere hergestellt durch ein Verfahren nach einer der zuvor erläuterten Ausführungsformen. Die im Zusammenhang mit dem Verfahren erläuterten Merkmale und Wirkungen gelten für das vorliegende Auflagerelement entsprechend.

Im Folgenden wird ein bevorzugtes Ausführungsbeispiel des erfindungsgemäßen Verfahrens anhand einer Zeichnung näher erläutert. Die Zeichnung zeigt in
Fig. 1 eine schematische Querschnittsansicht einer Einspritzpressvorrichtung während eines ersten Schritts des Verfahrens, in welchem die Hülle hergestellt wird, und
Fig. 2 eine schematische Querschnittsansicht einer Einspritzpressvorrichtung während eines zweiten Schritts des Verfahrens, in welchem der Auflagerkörper von innen an die Hülle gespritzt wird.

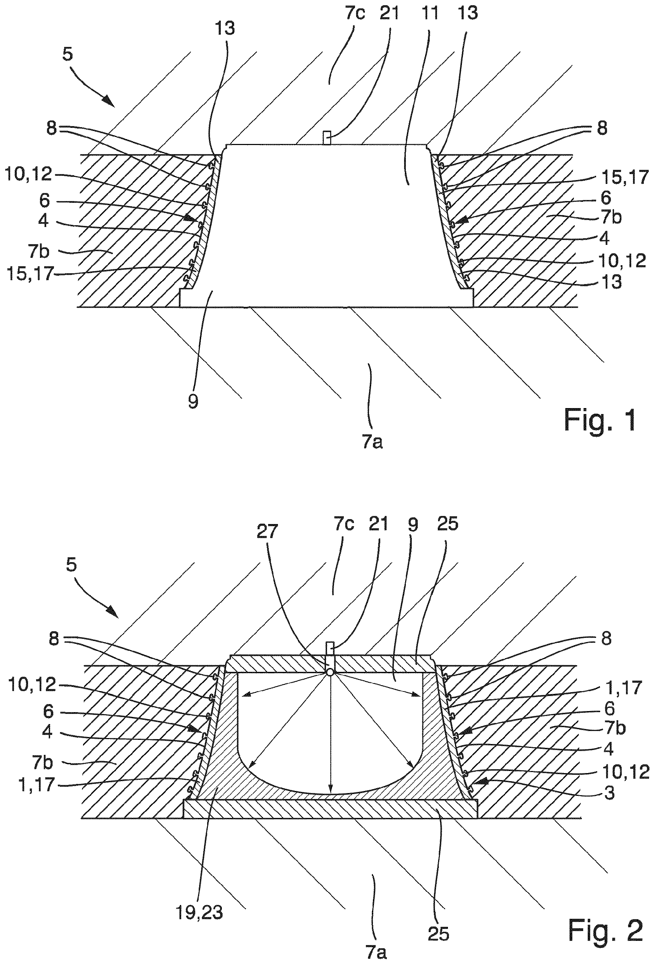

Fign. 1 und 2 verdeutlichen die Herstellung eines mit einer Beschichtung 1 beschichteten Auflagerelements 3 aus Elastomermaterial gemäß einer Ausführungsform des erfindungsgemäßen Verfahrens. In dieser Ausführungsform ist das Auflagerelement 3 als Federelement für Schienenfahrzeuge gebildet, nämlich entweder als Primärfederelement oder als Notfederelement für Luftfedern von Schienenfahrzeugen, und die Beschichtung 1 des Auflagerelements 3 ist eine Brandschutzbeschichtung.

Bei dem Verfahren wird zunächst eine Einspritzpressvorrichtung 5 mit mehreren relativ zueinander beweglichen Formteilen 7a, 7b, 7c bereitgestellt, die ein unbewegliches Formunterteil 7a, mehrere horizontal bewegliche Formseitenteile 7b und ein vertikal bewegliches Formoberteil 7c umfassen, wie in Fig. 1 und 2 dargestellt. Die Einspritzpressvorrichtung 5 ist so gebildet, dass die Formteile 7a, 7b, 7c in einer geschlossenen Stellung gemeinsam einen Hohlraum 9 umschließen. Der Hohlraum 9 entspricht dabei der Form des herzustellenden Auflagerelements 3. Ferner weisen die Formteile 7a, 7b, 7c, im vorliegenden Ausführungsbeispiel die Formseitenteile 7b, eine zum Hohlraum 9 gerichtete innere Oberfläche 4 auf, welche mit einer Oberflächenstruktur 6 versehen ist, die gleichmäßig über die innere Oberfläche 4 der Formseitenteile 7b verteilt ist und mehrere mit Hinterschneidungen 8 versehene Aussparungen 10 aufweist.

In den Hohlraum 9 wird nun ein Formkern 11 eingelegt, wie in Fig. 1 dargestellt. Der Formkern 11 entspricht der Form des herzustellenden Auflagerelements 3 abzüglich der Beschichtung 1. Dabei bleibt zwischen den Formteilen 7a, 7b, 7c und dem Formkern 11 ein Spalt 13, welcher der Form der Beschichtung 1 des herzustellenden Auflagerelements 3 entspricht. Der Formkern 11 weist ferner eine haftungsarme Beschichtung auf, beispielsweise aus Polytetrafluorethylen (PTFE).

Anschließend wird, wie in Fig. 1 gezeigt, eine erste Mischung 15 in Form einer Elastomermischung in den Spalt eingefügt. In der vorliegenden Ausführungsform ist die erste Mischung 15 eine Brandschutzkautschukmischung zur Herstellung eines Brandschutzelastomermaterials, das von Feuer oder sehr hohen Temperaturen nicht bzw. nur sehr langsam zerstört wird. Danach werden die Formteile 7a, 7b, 7c geschlossen, wobei die erste Mischung 15 plastifiziert wird und den Spalt 13 vollständig ausfüllt. Auf diese Weise bildet die erste Mischung 15 eine Hülle 17, welche die Form der Beschichtung 1 hat. Dabei werden auch die Aussparungen 10 samt Hinterschneidungen 8 der Oberflächenstruktur 6 an der inneren Oberfläche 4 der Formseitenteile 7b von der ersten Mischung 15 ausgefüllt, so dass die Hülle 17 mehrere in die Aussparungen 10 ragende, ebenfalls mit Hinterschneidungen 8 versehene Vorsprünge 12 aufweist, wodurch die Adhäsion zwischen der inneren Oberfläche 4 der Formseitenteile 7b und der Hülle 17 erhöht wird.

Daraufhin wird die Hülle 17 anvulkanisiert bis zumindest die Oberfläche der Hülle 17 gehärtet ist, so dass die Hülle 17 von den Formteilen 7a, 7b, 7c und dem Formkern 11 gelöst werden kann.

Dann wird der Formkern 11 aus der Hülle 17 entfernt, insbesondere in geöffneter Stellung der Formteile 7a, 7b, 7c entnommen. Daraufhin werden die Formteile 7a, 7b, 7c wieder geschlossen. Der Formkern 11 kann dabei auch als Zerfallskern ausgebildet sein, der in kleine Teile zerlegt werden kann, die sich leichter entfernen lassen.

Danach wird, wie in Fig.2 dargestellt, in geschlossener Stellung der Formteile 7a, 7b, 7c unter Druck eine zweite Mischung 19 in Form einer Elastomermischung in den Hohlraum 9 eingespritzt. Das Einspritzen erfolgt durch eine Öffnung 21 in dem Formoberteil 7c. Dabei wird die zweite Mischung 19 plastifiziert und bildet einen Auflagerkörper 23, der an der Innenseite der Hülle 17 anliegt. Der Auflagerkörper 23 enthält neben der zweiten Mischung 19 auch noch zwei Metallplatten 25, die an der Oberseite und an der Unterseite des Auflagerkörpers 23 vorgesehen und mit der zweiten Mischung 19 bzw. dem Elastomermaterial des Auflagerkörpers 23 verbunden sind. Die Metallplatten 25 werden vor bzw. nach dem Einspritzen der zweiten Mischung 19 in den Hohlraum 9 eingefügt, wobei der Hohlraum 9 die Form der Metallplatten 25 berücksichtigt und die obere Metallplatte eine mit der Öffnung 21 fluchtende Bohrung 27 zum Hindurchspritzen der zweiten Mischung 19 aufweist. Die Beschichtung 1 bedeckt dabei nur die seitlichen Oberflächen des Auflagerkörpers 23, die nicht von Metallplatten 25 bedeckt sind.

Schließlich wird der Auflagerkörper 23 zusammen mit der Hülle 17 in dem Hohlraum 9 ausvulkanisiert. Dabei werden der Auflagerkörper 23 und die Hülle 17 miteinander verbunden, so dass die Hülle 17 die Beschichtung 1 des Auflagerkörpers 23 bildet.

Anschließend werden die Formteile 7a, 7b, 7c geöffnet und das fertiggestellte beschichtete Auflagerelement 3, d.h. der mit der Beschichtung 1 versehene Auflagerkörper 23, wird aus dem Hohlraum 9 entnommen. Die Vorsprünge 12 verbleiben in der vorliegenden Ausführungsform beim Entnehmen des Auflagerelements 3 aus dem Hohlraum 9 an der Beschichtung 1, wobei die Vorsprünge 12 elastisch verformt werden, um aus den Aussparungen 10 entfernt zu werden. Die Vorsprünge 12 können entweder in einem nachfolgenden Schritt von der Beschichtung 1 des Auflagerelements 3 entfernt werden oder dauerhaft an der Beschichtung 1 verbleiben.

Mit einem solchen Verfahren kann ein mit einer Brandschutzbeschichtung beschichtetes Auflagerelement 3 hoher Qualität in einem effizienten und gut reproduzierbaren Fertigungsprozess hergestellt werden.

### Bezugszeichenliste

- 1: Beschichtung
- 3: Auflagerelement
- 4: Innere Oberfläche
- 5: Einspritzpressvorrichtung
- 6: Oberflächenstruktur
- 7a: Formunterteil
- 7b: Formseitenteil
- 7c: Formoberteil
- 8: Hinterschneidung
- 9: Hohlraum
- 10: Aussparung
- 11: Formkern
- 12: Vorsprung
- 13: Spalt
- 15: erste Mischung
- 17: Hülle
- 19: zweite Mischung
- 21: Öffnung
- 23: Auflagerkörper
- 25: Metallplatten
- 27: Bohrung

## Patentansprüche

1. Verfahren zur Herstellung eines mit einer Beschichtung (1) beschichteten Auflagerelements (3) aus Elastomermaterial mit den Schritten
- Bereitstellen einer Einspritzpressvorrichtung (5) mit mehreren relativ zueinander beweglichen Formteilen (7a, 7b, 7c), die in geschlossener Stellung gemeinsam einen Hohlraum (9) umschließen, welcher der Form des herzustellenden Auflagerelements (3) entspricht, wobei die Formteile (7a, 7b, 7c) eine zum Hohlraum (9) weisende, mit einer Oberflächenstruktur (6) versehene innere Oberfläche (4) aufweisen,
- in den Hohlraum (9) Einlegen eines Formkerns (11), welcher der Form des herzustellenden Auflagerelements (3) abzüglich der Beschichtung (1) entspricht, so dass zwischen den Formteilen (7a, 7b, 7c) und dem Formkern (11) ein Spalt (13) bleibt, welcher der Form der Beschichtung (1) des herzustellenden Auflagerelements (3) entspricht,
- Einfügen einer ersten Mischung (15) in den Spalt (13), so dass die erste Mischung (15) den Spalt (13) ausfüllt und auf diese Weise eine Hülle (17) bildet, welche die Form der Beschichtung (1) hat, wobei die erste Mischung (15) auch die Oberflächenstruktur (6) ausfüllt, wobei die Oberflächenstruktur (6) mehrere Aussparungen (10) aufweist, welche von der ersten Mischung (15) ausgefüllt werden, so dass die Hülle (17) mehrere in die Aussparungen (10) ragende Vorsprünge (12) aufweist,
wobei entweder die Aussparungen (10) als Bohrungen und die Vorsprünge (12) als mit den Bohrungen reibschlüssig eingreifende Stifte gebildet sind oder
wobei die Aussparungen (10) und Vorsprünge (12) mit Hinterschneidungen (8) versehen sind, die formschlüssig miteinander eingreifen.
- Anvulkanisieren der Hülle (17),
- Entfernen des Formkerns (11),
- Einspritzen einer zweiten Mischung (19) in den Hohlraum (9), so dass diese einen Auflagerkörper (23) bildet, der an der Innenseite der Hülle (17) anliegt,
- Ausvulkanisieren des Auflagerkörpers (23) zusammen mit der Hülle (17), so dass diese miteinander verbunden werden und die Hülle (17) die Beschichtung (1) des Auflagerkörpers (23) bildet.

2. Verfahren nach Anspruch 1, wobei die Oberflächenstruktur (6) gleichmäßig über die innere Oberfläche (4) der Formteile (7a, 7b, 7c) verteilt ist.

3. Verfahren nach Anspruch 1 oder 2, wobei der Formkern (11) eine haftungsarme Beschichtung aufweist.

4. Verfahren nach einem der Ansprüche 1 bis 3, wobei nach dem Ausvulkanisieren das beschichtete Auflagerelement (3) mitsamt den Vorsprüngen (12) aus dem Hohlraum (9) entnommen wird.

5. Verfahren nach Anspruch 4, wobei nach dem Entnehmen des Auflagerelements (3) aus dem Hohlraum (9) die Vorsprünge (12) entfernt werden.

6. Verfahren nach einem der Ansprüche 1 bis 3, wobei nach dem Ausvulkanisieren das beschichtete Auflagerelement (3) aus dem Hohlraum (9) entnommen wird, wobei die Vorsprünge (12) abgerissen werden und in den Aussparungen (10) verbleiben.

7. Verfahren nach einem der vorhergehenden Ansprüche, wobei die Beschichtung (1) eine Brandschutzbeschichtung ist.

8. Verfahren nach einem der vorhergehenden Ansprüche, wobei das Auflagerelement (3) als Notfederelement für Luftfedern von Schienenfahrzeugen oder als Primärfederelement für Schienenfahrzeuge gebildet ist.

9. Auflagerelement (3) aus Elastomermaterial für Fahrzeuge, insbesondere Schienenfahrzeuge, beschichtet mit einer Brandschutzbeschichtung und erhältlich durch ein Verfahren nach einem der Ansprüche 1 bis 8.

## Claims

1. Process for producing a support element (3) made of elastomer material and coated with a coating (1) comprising the steps of
- provision of an injection press apparatus (5) comprising a plurality of mold parts (7a, 7b, 7c) movable relative to one another which in the closed position together encompass a cavity (9) corresponding to the shape of the support element (3) to be produced, wherein the mold parts (7a, 7b, 7c) comprise an inner surface (4) which faces the cavity (9) and is provided with a surface structure (6),
- insertion into the cavity (9) of a mold core (11) which corresponds to the shape of the support element (3) to be produced minus the coating (1) with the result that a gap (13) remains between the mold parts (7a, 7b, 7c) and the mold core (11) which corresponds to the shape of the coating (1) of the support element (3) to be produced,
- introduction of a first mixture (15) into the gap (13) so that the first mixture (15) fills the gap (13) and thus forms a shell (17) having the shape of the coating (1), wherein the first mixture (15) also fills the surface structure (6), wherein the surface structure (6) comprises a plurality of recesses (10) which are filled by the first mixture (15) so that the shell (17) comprises a plurality of projections (12) protruding into the recesses (10),
wherein either the recesses (10) are in the form of bores and the projections (12) are in the form of pins which frictionally engage with the bores or wherein the recesses (10) and projections (12) are provided with undercuts (8) which interlock with one another,
- part-vulcanization of the shell (17),
- removal of the mold core (11),
- injection of a second mixture (19) into the cavity (9) so that this forms a support body (23) contacting the inside of the shell (17),
- full-vulcanization of the support body (23) together with the shell (17) so that these are joined to one another and the shell (17) forms the coating (1) of the support body (23).

2. Process according to Claim 1, wherein the surface structure (6) is uniformly distributed over the inner surface (4) of the mold parts (7a, 7b, 7c).

3. Process according to Claim 1 or 2, wherein the mold core (11) has a low-adhesion coating.

4. Process according to any of Claims 1 to 3, wherein after the full-vulcanization the coated support element (3) including the projections (12) is withdrawn from the cavity (9).

5. Process according to Claim 4, wherein after the withdrawal of the support element (3) from the cavity (9) the projections (12) are removed.

6. Process according to any of Claims 1 to 3, wherein after the full-vulcanization the coated support element (3) is withdrawn from the cavity (9), the protrusions (12) being torn off and remaining in the recesses (10).

7. Process according to any of the preceding claims, wherein the coating (1) is a fire protection coating.

8. Process according to any of the preceding claims, wherein the support element (3) is in the form of an emergency spring element for air springs of rail vehicles or as a primary spring element for rail vehicles.

9. Support element (3) made of elastomer material for vehicles, in particular rail vehicles, coated with a fire protection coating and obtainable by a process according to any of Claims 1 to 8.

## Revendications

1. Procédé de fabrication d'un élément d'appui (3) en matériau élastomère revêtu d'un revêtement (1), avec les étapes suivantes
- la préparation d'un dispositif de compression par injection (5) avec plusieurs pièces moulées (7a, 7b, 7c) mobiles les unes par rapport aux autres qui, en position fermée, entourent ensemble une cavité (9) qui correspond à la forme de l'élément d'appui (3) à fabriquer, les pièces moulées (7a, 7b, 7c) présentant une surface intérieure (4) orientée vers la cavité (9), pourvue d'une structure de surface (6),
- la mise en place dans la cavité (9) d'un noyau de moule (11) qui correspond à la forme de l'élément d'appui (3) à fabriquer, moins le revêtement (1), de telle sorte qu'il reste entre les pièces moulées (7a, 7b, 7c) et le noyau de moule (11) un espace (13) qui correspond à la forme du revêtement (1) de l'élément d'appui (3) à fabriquer,
- l'insertion d'un premier mélange (15) dans l'espace (13) de telle sorte que le premier mélange (15) remplisse l'espace (13) et forme ainsi une enveloppe (17) qui a la forme du revêtement (1), le premier mélange (15) remplissant également la structure de surface (6), la structure de surface (6) présentant plusieurs évidements (10) qui sont remplis par le premier mélange (15), de telle sorte que l'enveloppe (17) présente plusieurs protubérances (12) qui font saillie dans les évidements (10),
soit les évidements (10) étant formés comme des alésages et les protubérances (12) comme des broches s'engageant par friction avec les alésages, soit les évidements (10) et les protubérances (12) étant pourvus de contre-dépouilles (8) qui s'engagent les unes avec les autres par complémentarité de forme,
- la vulcanisation de l'enveloppe (17),
- le retrait du noyau de moule (11),
- l'injection d'un deuxième mélange (19) dans la cavité (9) de telle sorte que celui-ci forme un corps d'appui (23) qui s'appuie contre le côté intérieur de l'enveloppe (17),
- la vulcanisation du corps d'appui (23) conjointement avec l'enveloppe (17) de telle sorte que ceux-ci soient liés l'un à l'autre et que l'enveloppe (17) forme le revêtement (1) du corps d'appui (23).

2. Procédé selon la revendication 1, dans lequel la structure de surface (6) est répartie uniformément sur la surface intérieure (4) des pièces moulées (7a, 7b, 7c).

3. Procédé selon la revendication 1 ou 2, dans lequel le noyau de moule (11) présente un revêtement à faible adhérence.

4. Procédé selon l'une quelconque des revendications 1 à 3, dans lequel, après la vulcanisation, l'élément d'appui revêtu (3) est enlevé de la cavité (9) avec les protubérances (12).

5. Procédé selon la revendication 4, dans lequel, après l'enlèvement de l'élément d'appui (3) de la cavité (9), les protubérances (12) sont retirées.

6. Procédé selon l'une quelconque des revendications 1 à 3, dans lequel, après la vulcanisation, l'élément d'appui revêtu (3) est enlevé de la cavité (9), les protubérances (12) étant arrachées et restant dans les évidements (10).

7. Procédé selon l'une quelconque des revendications précédentes, dans lequel le revêtement (1) est un revêtement ignifuge.

8. Procédé selon l'une quelconque des revendications précédentes, dans lequel l'élément d'appui (3) est formé comme un élément de ressort de secours pour des ressorts pneumatiques de véhicules ferroviaires ou comme un élément de ressort primaire pour des véhicules ferroviaires.

9. Élément d'appui (3) en matériau élastomère pour véhicules, notamment véhicules ferroviaires, revêtu d'un revêtement ignifuge et pouvant être obtenu par un procédé selon l'une quelconque des revendications 1 à 8.
